# EUROPEAN PATENT APPLICATION

(11) **EP 4 503 319 A1**
(43) Date of publication of application: **05.02.2025**
(21) Application number: 23774452.9
(22) Date of filing: 03.03.2023
(51) Int. Cl.: H01M 50/533, H01M 10/04, H01M 10/0587, H01M 50/536, H01M 50/586, H01M 50/595

(54) **CYLINDRICAL BATTERY**

(30) Priority: 25.03.2022 JP 2022049301
(71) Applicant: Panasonic Energy Co., Ltd., Osaka 570-8511 (JP)
(72) Inventor: FUKUI, Kosuke, Osaka 571-0057 (JP); WAKABAYASHI, Hiromichi, Osaka 571-0057 (JP); IMAOKU, Takao, Osaka 571-0057 (JP); ITO, Katsuya, Osaka 571-0057 (JP)
(74) Representative: Eisenführ Speiser
(86) International application number: PCT/JP2023/008092
(87) International publication number: WO 2023/181853

(57) **Abstract**

A cylindrical battery (10) comprises an electrode body (14) formed by winding a positive electrode (11) and a negative electrode (12). The positive electrode (11) includes: a positive electrode core (21) on which a positive electrode tab (20) is welded at a point along the winding direction; and a positive electrode mix layer (22) which is formed on both surfaces of the positive electrode core (21). The positive electrode tab (20) includes slit burrs (20a) which are formed at the ends in the width direction. In a state in which the positive electrode (11) is wound, the positive electrode tab is welded so that the slit burrs (20a) are positioned outside the winding and on the side opposite the surface where the positive electrode tab is welded to the electrode core (21) .

## Description

### TECHNICAL FIELD

The present disclosure relates to a cylindrical battery.

### BACKGROUND ART

In cylindrical batteries such as lithium ion batteries, an electrode assembly (wound body) in which a positive electrode and a negative electrode are wound is housed in a cylinder-shaped outer housing can, with a positive electrode tab connected to the positive electrode connected to a positive electrode external terminal and with a negative electrode tab connected to the negative electrode connected to a negative electrode external terminal so that a connection terminal for the outside is formed. The positive electrode tab is formed by cutting an aluminum sheet in a predetermined width using a slit blade. When the aluminum sheet is cut, pointed slit burrs are formed at ends of a cut surface of the positive electrode tab.

As the capacity of cylindrical batteries increases, the positive electrode cores have been thinner and tend to decrease in strength. Further, due to mixtures with a higher density, slit burrs of the positive electrode tab are repeatedly pressed against the positive electrode core due to expansion and contraction of the negative electrode in accordance with charge and discharge, which could occasionally cut the positive electrode core. If the positive electrode core breaks, normal charge and discharge can no longer be performed. When an H material subjected to work-hardening is used for the positive electrode tab, the probability that the positive electrode core breaks increases.

Patent Literature 1 describes, in FIG. 4, a cylindrical battery in which slit burrs are disposed at positions not facing the core, on an outer side of the outer most circumferential winding of a wound body.

### CITATION LIST

### PATENT LITERATURE

PATENT LITERATURE 1: Japanese Unexamined Patent Application Publication No. 2008-204902

### SUMMARY

In order to increase the current collecting efficiency, a positive electrode tab is welded at a center in a longitudinal direction (winding direction) of a positive electrode. In a wound body, the positive electrode tab is sandwiched between negative electrode mixture layers and receives a strong force due to expansion and contraction during charge and discharge, which could increase the possibility of causing the positive electrode core to break.

It is an advantage of the present disclosure to provide a cylindrical battery capable of suppressing breakage of a positive electrode core due to charge and discharge.

A cylindrical battery according to the present disclosure comprises an electrode assembly formed by winding a positive electrode and a negative electrode. The positive electrode includes: a positive electrode core with a positive electrode tab welded halfway in a winding direction; and positive electrode mixture layers formed on both sides of the positive electrode core. The positive electrode tab is characterized by having a slit burr formed at an end in a width direction and being welded such that the slit burr is positioned on a side opposite to a surface welded to the positive electrode core and on an outer side of winding, in a state of the positive electrode being wound.

A cylindrical battery according to the present disclosure may suppress breakage of a positive electrode core due to charge and discharge.

### BRIEF DESCRIPTION OF DRAWINGS

FIG. 1 is a sectional view of a cylindrical battery according to the present disclosure.
FIG. 2 is a view showing a positive electrode of an embodiment.
FIG. 3 is a view showing a negative electrode of the embodiment.
FIG. 4A is a view showing a method for manufacturing a positive electrode tab of the cylindrical battery according to the present disclosure, the view showing a state of an aluminum roll being cut by a slit blade as seen from above.
FIG. 4B is a view showing the method for manufacturing the positive electrode tab of the cylindrical battery according to the present disclosure, which is a sectional view of the aluminum roll being cut.
FIG. 5 is a view showing a cross-section of the positive electrode tab according to the present disclosure.
FIG. 6 is a view showing a simplified cross-sectional structure of the cylindrical battery with the positive electrode tab disposed at a winding-start.
FIG. 7 is a view showing a simplified cross-sectional structure of the cylindrical battery with the positive electrode tab disposed at a center.
FIG. 8 is an expanded sectional view of the vicinity of a positive electrode tab of a comparative example.
FIG. 9 is an expanded sectional view of the vicinity of the positive electrode tab of the embodiment.

### DESCRIPTION OF EMBODIMENT

Hereinafter, an embodiment of the present disclosure will be described in detail with reference to the drawings. In the following description, the specific shapes, materials, directions, numerical values, and the like are exemplary illustrations for easier understanding of the present disclosure and may be appropriately changed in accordance with applications, purposes, specifications, and the like. Further, it is originally expected that the constituent elements of the embodiment and the modification described below are selectively combined.

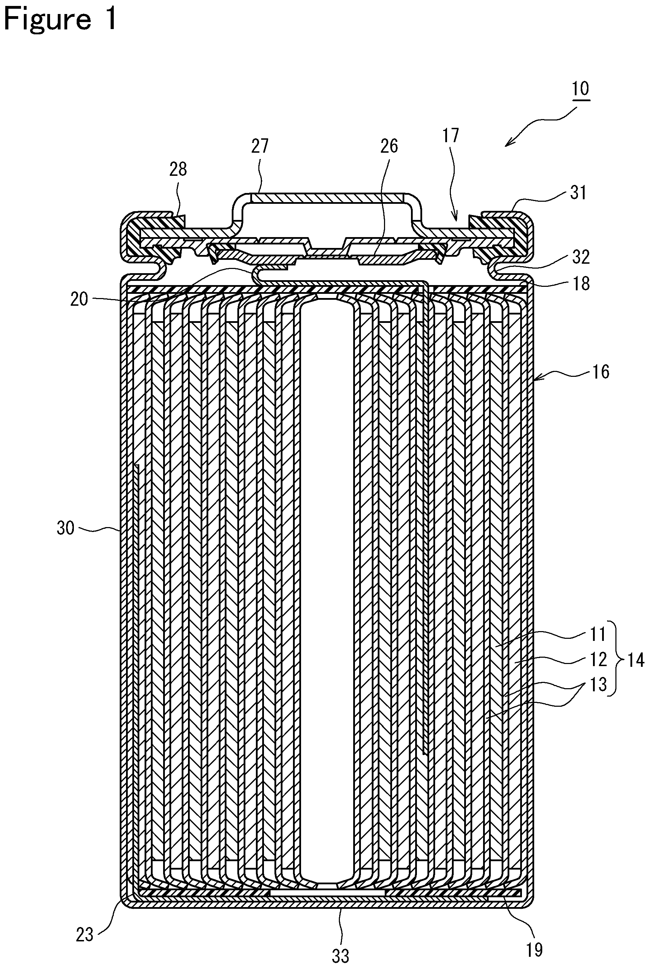

FIG. 1 is a sectional view of a cylindrical battery 10 according to an embodiment of the present disclosure. As shown in FIG. 1, the cylindrical battery 10 comprises a bottomed cylinder-shaped outer housing can 16, a sealing assembly 17 that seals an opening of the outer housing can 16, and a gasket 28 interposed between the outer housing can 16 and the sealing assembly 17. Further, the cylindrical battery 10 comprises an electrode assembly 14 and an electrolyte that are housed in the outer housing can 16. The electrode assembly 14 includes a positive electrode 11, a negative electrode 12, and separators 13, and has a structure in which the positive electrode 11 and the negative electrode 12 are wound in a spiral via the separators 13.

A non-aqueous electrolyte includes a non-aqueous solvent and electrolyte salt dissolved in the non-aqueous solvent. For the non-aqueous solvent, for example, esters, ethers, nitriles, amides, a mixed solvent of two or more of these, and the like may be used. The non-aqueous solvent may contain a halogen-substituted substance formed by replacing at least a portion of hydrogen as a solvent with a halogen atom such as fluorine. Note that the non-aqueous electrolyte is not limited to a liquid electrolyte and may be a solid electrolyte using a gelatinous polymer or the like. For the electrolyte salt, lithium salt such as LiPF₆ is used.

The electrode assembly 14 includes the long-strip shaped positive electrode 11, the long-strip shaped negative electrode 12, and the two long-strip shaped separators 13. Further, the electrode assembly 14 includes a positive electrode tab 20 joined to the positive electrode 11 and a negative electrode tab 23 joined to the negative electrode 12. The negative electrode 12 is formed in dimensions slightly larger than the positive electrode 11 and longer than the positive electrode 11 in the longitudinal direction and the width direction (transverse direction) in order to suppress lithium deposition. Further, the two separators 13 are formed in dimensions slightly larger than at least the positive electrode 11 and are disposed, for example, so as to sandwich the positive electrode 11.

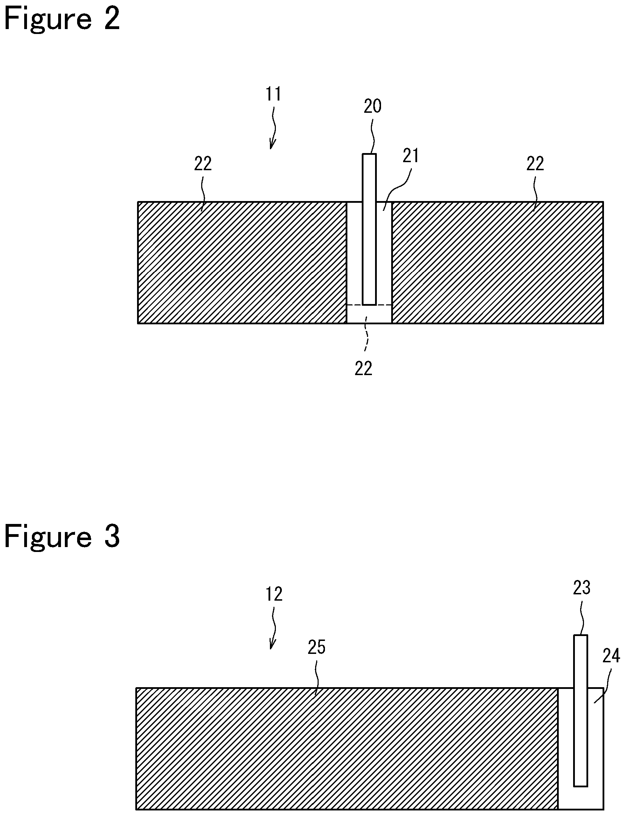

The positive electrode 11 includes a positive electrode core 21 and positive electrode mixture layers 22 formed on both sides of the positive electrode core 21 (see FIG. 2). For the positive electrode core 21, metal foil stable in a potential range of the positive electrode 11, such as aluminum and an aluminum alloy, a film with the metal disposed on the surface layer, and the like may be used. The positive electrode mixture layers 22 include a positive electrode active material, a conductive agent, and a binding agent. The positive electrode 11 may be produced, for example, such that the positive electrode core 21 is coated with positive electrode mixture slurry including the positive electrode active material, the conductive agent, the binding agent, and the like, and the coating is dried and is then compressed so that the positive electrode mixture layers 22 are formed on both sides of the positive electrode core 21.

The positive electrode active material includes a lithium-containing metal composite oxide as a main component. Examples of the metal element contained in the lithium-containing metal composite oxide may include Ni, Co, Mn, Al, B, Mg, Ti, V, Cr, Fe, Cu, Zn, Ga, Sr, Zr, Nb, In, Sn, Ta, and W. A preferable example of the lithium-containing metal composite oxide is a composite oxide containing at least one of the group consisting of Ni, Co, Mn, and Al.

Examples of the conductive agent included in the positive electrode mixture layers 22 may include carbon materials, such as carbon black, acetylene black, ketjen black, and graphite. Examples of the binding agent included in the positive electrode mixture layers 22 may include a fluorine resins, such as polytetrafluoroethylene (PTFE) and polyvinylidene fluoride (PVdF), polyacrylonitrile (PAN), polyimide, an acrylic resin, and polyolefin. These resins and cellulose derivatives such as carboxymethylcellulose (CMC) or its salt, a polyethylene oxide (PEO), and the like may be concurrently used.

The negative electrode 12 includes a negative electrode core 24 and negative electrode mixture layers 25 formed on both sides of the negative electrode core 24 (see FIG. 3). For the negative electrode core 24, metal foil stable in a potential range of the negative electrode 12, such as copper and a copper alloy, a film with the metal disposed on the surface layer, and the like may be used. The negative electrode mixture layers 25 include a negative electrode active material and a binding agent. The negative electrode 12 may be produced, for example, such that the negative electrode core 24 is coated with negative electrode mixture slurry including the negative electrode active material, the binding agent, and the like, and the coating is dried and is then compressed so that the negative electrode mixture layers 25 are formed on both sides of the negative electrode core 24.

For the negative electrode active material, carbon materials that reversibly occlude and release lithium ions are generally used. The preferable carbon materials include graphite such as natural graphite such as flaky graphite, massive graphite, and earthy graphite, or artificial graphite such as massive artificial graphite and graphitized mesophase carbon microbeads. The negative electrode mixture layers 25 may include, as the negative electrode active material, a Si-containing compound. In addition, for the negative electrode active material, a metal, other than Si, that is alloyed with lithium, an alloy containing the metal, a compound containing the metal, and the like may be used.

For the binding agent included in the negative electrode mixture layers 25, a fluorine resin, PAN, a polyimide resin, an acrylic resin, a polyolefin resin, and the like may be used, as with the case of the positive electrode 11, but styrene butadiene rubber (SBR) or its modified substance is preferably used. The negative electrode mixture layers 25 may include, for example, in addition to SBR or the like, CMC or its salt, polyacrylic acid (PAA) or its salt, and polyvinyl alcohol.

For the separators 13, a porous sheet having ion permeability and insulating property is used. Specific examples of the porous sheet may include a microporous thin film, woven fabric, and nonwoven fabric. As a material of the separators 13, olefin resins such as polyethylene and polypropylene, cellulose, and the like are preferable. Each separator 13 may be in either a single layer structure or a stacked layer structure. A heat resistant layer or the like may be formed on a surface of the separator 13. Note that the negative electrode 12 may form a winding-start end of the electrode assembly 14, but in general, the separator 13 extends beyond an end on a winding-start side of the negative electrode 12, and an end on a winding-start side of the separator 13 becomes the winding-start end of the electrode assembly 14.

In the example shown in FIG. 1, the positive electrode tab 20 is electrically connected to a middle section in a winding direction of the positive electrode core 21, and the negative electrode tab 23 is electrically connected to an end of a winding-end in a winding direction of the negative electrode core 24. However, the negative electrode tab may be electrically connected to an end of a winding-start in the winding direction of the negative electrode core 24. Alternatively, the electrode assembly 14 may include two negative electrode tabs, with one negative electrode tab electrically connected to the end of the winding-start in the winding direction of the negative electrode core 24 and with the other negative electrode tab electrically connected to the end of the winding-end in the winding direction of the negative electrode core 24. Alternatively, the negative electrode 12 and the outer housing can 16 may be electrically connected by bringing the end on the winding-end side in the winding direction of the negative electrode core 24 into contact with an inner surface of the outer housing can 16.

As shown in FIG. 1, the cylindrical battery 10 further includes an insulating plate 18 disposed on an upper side of the electrode assembly 14 and an insulating plate 19 disposed on a lower side of the electrode assembly 14. In the example shown in FIG. 1, the positive electrode tab 20 attached to the positive electrode 11 passes through a through-hole of the insulating plate 18 and extends to the sealing assembly 17 side, and the negative electrode tab 23 attached to the negative electrode 12 passes an outer side of the insulating plate 19 and extends to a bottom 33 side of the outer housing can 16. The positive electrode tab 20 is connected, by welding or the like, to an underside of a terminal plate 26 as a bottom plate of the sealing assembly 17, and a positive electrode cap 27 as a top plate of the sealing assembly 17 electrically connected to the terminal plate 26 serves as a positive electrode external terminal. Further, the negative electrode tab 23 is connected, by welding or the like, to an inner surface of the bottom 33 of the outer housing can 16, and the outer housing can 16 serves as a negative electrode external terminal.

The outer housing can 16 is a metal container having a bottomed cylinder-shaped portion. The annular gasket 28 seals between the outer housing can 16 and the sealing assembly 17, thereby sealing an internal space of the battery. The gasket 28 is sandwiched between the outer housing can 16 and the sealing assembly 17, and insulates the sealing assembly 17 from the outer housing can 16. The gasket 28 has a role as a sealing material to maintain the air tightness inside the battery and prevents leakage of an electrolyte solution. Further, the gasket 28 also has a role as an insulating material to prevent a short circuit between the outer housing can 16 and the sealing assembly 17.

The outer housing can 16 has a projection projecting radially inward on an inner circumferential side, by providing a grooved portion 32 in a portion in a height direction on a cylindrical outer circumferential surface of the outer housing can 16. The grooved portion 32 may be formed by, for example, spinning a portion on the cylindrical outer circumferential surface radially inward so as to dent the portion radially inward. The outer housing can 16 includes a bottomed cylinder-shaped portion 30 including the grooved portion 32 and an annular crimping portion 31. The bottomed cylinder-shaped portion 30 houses the electrode assembly 14 and the non-aqueous electrolyte, and the crimping portion 31 is folded radially inward from an end on an opening side of the bottomed cylinder-shaped portion 30 and extends radially inward. The crimping portion 31 is formed when an upper end of the outer housing can 16 is inwardly folded to be crimped on a circumferential edge side of the sealing assembly 17. The sealing assembly 17 is fixed together with the gasket 28 to the outer housing can 16 while being sandwiched between the crimping portion 31 and an upper side of the grooved portion 32, through the crimping.

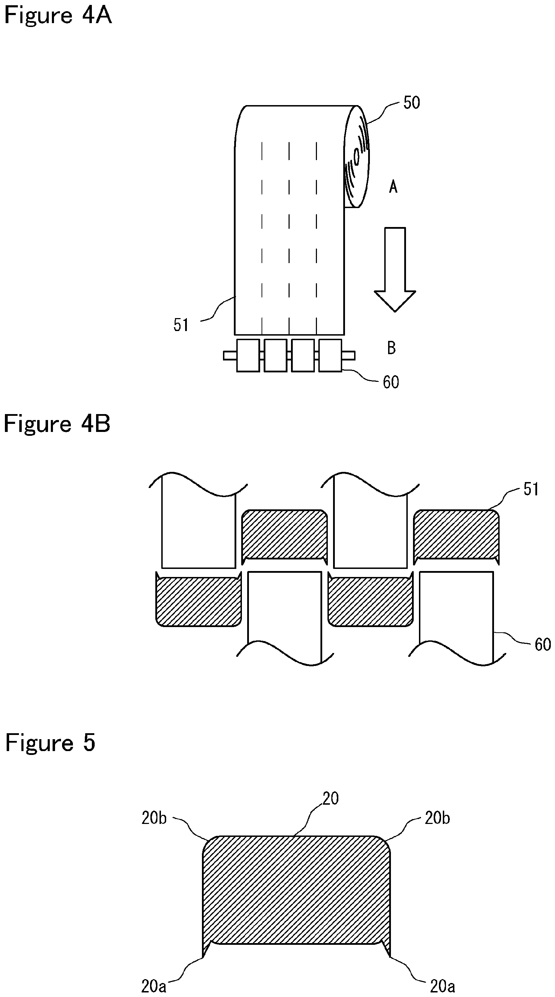

Next, FIGS. 4A and 4B show a method for manufacturing the positive electrode tab 20. FIG. 4A is a view of a state of an aluminum roll 50 being cut by a slit blade 60 as seen from above, and FIG. 4B shows a cross-section of the aluminum roll 50 being cut by the slit blade 60.

The positive electrode tab 20 is formed by slit processing. The aluminum roll 50 with sheet-shaped aluminum foil 51 wound is conveyed in a direction from A to B while being rewound and is cut in a predetermined width (width of the positive electrode tab 20) by the slit blade 60. The cut aluminum foil 51 is individually reeled as a roll again. The positive electrode tab 20 is obtained by cutting the aluminum foil 51 in a predetermined length from the reeled roll.

As shown in FIG. 4B, the slit blade 60 having a pair of an upper blade and a lower blade is used and cutting is performed by passing the aluminum foil 51 through between the upper blade and the lower blade.

FIG. 5 shows a sectional view of the positive electrode tab 20 formed from the aluminum foil 51 after cutting. In the positive electrode tab 20, slit burrs 20a are formed at ends in a width direction and sags 20b are formed on the opposite side in a plate thickness direction of the slit burrs 20a by means of the upper and lower blades of the slit blade 60.

As shown in FIG. 2, the positive electrode tab 20 is welded to the positive electrode core 21 in a region where the positive electrode mixture layer 22 of the positive electrode 11 is not formed. Note that in FIG. 2, the positive electrode mixture layer 22 is not formed in the transverse direction of the positive electrode tab 20 to be welded, but the positive electrode mixture layer 22 may be formed on one end side in the transverse direction as denoted by a broken line. In the state of the positive electrode 11 being wound in the electrode assembly 14, the negative electrode 12 repeats the expansion and contraction to compress the positive electrode 11 due to the repeated charge and discharge of the cylindrical battery 10. At this time, when the slit burrs 20a of the positive electrode tab 20 abut on the positive electrode core 21, the positive electrode core 21 could occasionally be broken by the slit burrs 20a. The breakage of the positive electrode core 21 is markedly generated when the positive electrode tab 20 is an H temper material with a high strength, but also in an O material subjected to softening treatment, there is a possibility that an excessive pressure exerted on the vicinity of the positive electrode tab 20 leads to breakage.

Thus, the cylindrical battery 10 of the present disclosure comprises the electrode assembly 14 formed by winding the positive electrode 11 and the negative electrode 12, the positive electrode 11 including the positive electrode core 21 in which the positive electrode tab 20 is welded halfway in the winding direction in the longitudinal direction and the positive electrode mixture layers 22 formed on both sides of the positive electrode core 21, and the positive electrode tab 20, which has slit burrs 20a formed at ends in the width direction, is welded such that in a state of the positive electrode 11 being wound, the slit burrs 20a are positioned on an opposite side of a surface welded to the positive electrode core 21 and on an outer side of winding, thereby enabling to suppress the breakage of the positive electrode core 21 due to the repeated charge and discharge.

### <Impact of Expansion and Contraction Pressures due to Charge and Discharge of Cylindrical battery>

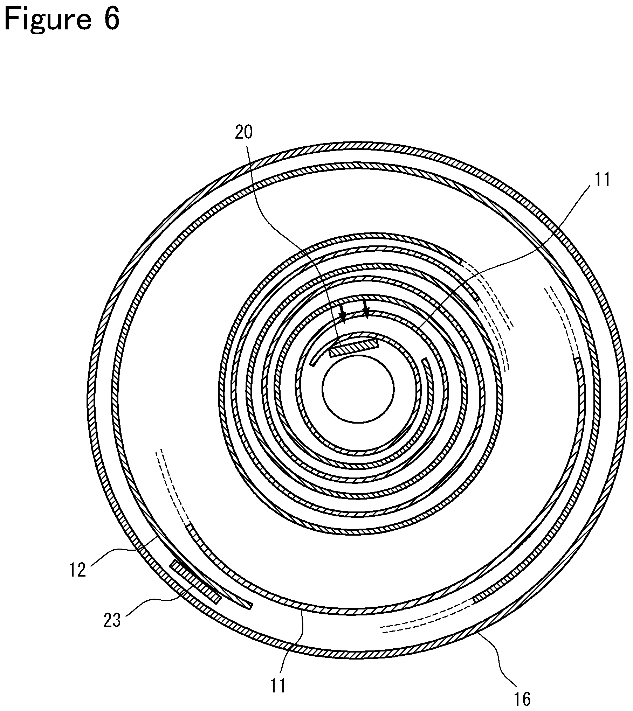

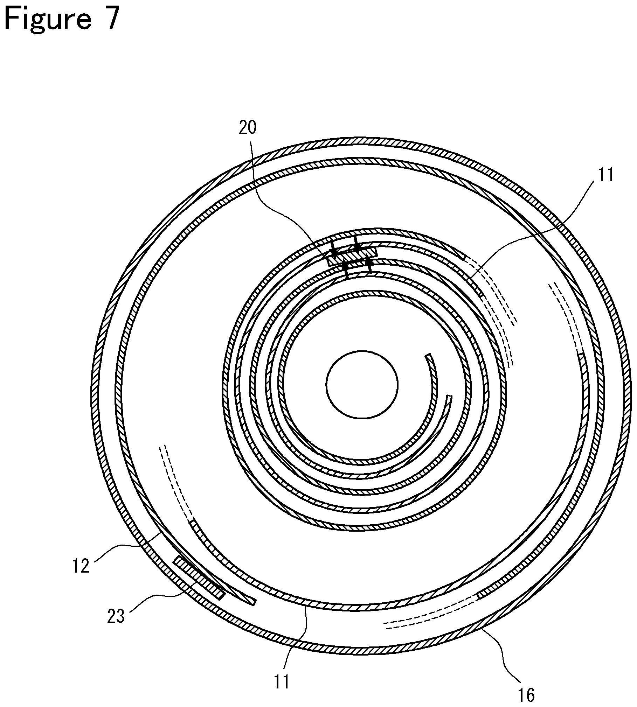

With reference to FIGS. 6 and 7, impacts of expansion and contraction pressures due to the charge and discharge of the cylindrical battery 10 depending on the welding position of the positive electrode tab 20 will be described. FIG. 6 is a simplified cross-sectional structure of the cylindrical battery 10 with the positive electrode tab 20 disposed at a winding-start, and FIG. 7 is a simplified cross-sectional structure of the cylindrical battery 10 with the positive electrode tab 20 disposed at a center.

In the structure of FIG. 6, since the positive electrode tab 20 is positioned at the winding-start (innermost circumferential side) of the wound body, the positive electrode tab 20 is not held by the negative electrode 12. Thus, the pressure that the positive electrode tab 20 receives due to the expansion and contraction in accordance with charge and discharge is low. In such a structure, the positive electrode core 21 is less likely to break irrespective of the arrangement of the slit burrs 20a.

However, when the positive electrode tab 20 is positioned at the winding-start of the wound body, there is a disadvantage in terms of the current collecting efficiency, and it is necessary to dispose the positive electrode tab 20 at the center in the winding direction of the positive electrode 11.

In the structure of FIG. 7, the positive electrode tab 20 is disposed at the center of the wound body and is thus held by the negative electrode 12. Thus, the pressure that the positive electrode tab 20 receives due to the expansion and contraction in accordance with charge and discharge is high. Therefore, when welding is performed such that the slit burrs 20a abut on the positive electrode core 21, the positive electrode core 21 is damaged to be broken by the slit burrs 20a due to the expansion and contraction.

### <Impact on Surface of Positive Electrode Tab which is Welded to Positive Electrode Core>

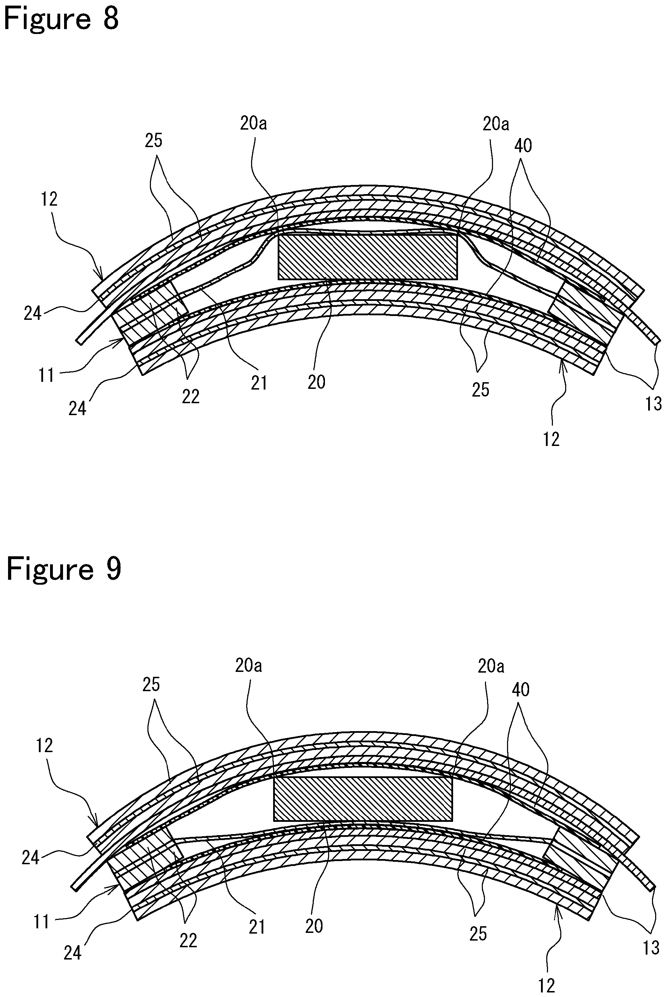

FIG. 8 shows an expanded cross-section of the arrangement structure of the positive electrode tab 20 of the cylindrical battery 10 of a comparative example. The positive electrode tab 20 is disposed at the center of the wound body as shown in FIG. 7. Thus, the positive electrode tab 20 is sandwiched between the negative electrode mixture layers 25 of the negative electrode 12.

In a state of the positive electrode 11 being wound, the positive electrode tab 20 is welded on an inner side of winding of the positive electrode core 21 and with the slit burrs 20a positioned on a side welded to the positive electrode core 21. In this structure, when the negative electrode 12 internally and externally compresses the positive electrode tab 20 due to the expansion and contraction, the slit burrs 20a press hard and damage the positive electrode core 21. Since distal ends of the slit burrs 20a are pointed, the positive electrode core 21 breaks due to the repeated compression and is cut in a transverse direction (direction in which the positive electrode tab 20 extends) in some cases.

### <Embodiment>

FIG. 9 shows an expanded cross-section of the arrangement structure of the positive electrode tab 20 of the cylindrical battery 10 of the embodiment. The positive electrode tab 20 is similarly disposed at the center of the wound body. Thus, the positive electrode tab 20 is sandwiched between the negative electrode mixture layers 25 of the negative electrode 12.

Further, in a state of the positive electrode 11 being wound, the positive electrode tab 20 is welded to the positive electrode core 21 such that the slit burrs 20a are positioned on an opposite side of a surface welded to the positive electrode core 21 and on an outer side of winding. With such a configuration, the slit burrs 20a of the positive electrode tab 20 do not contact the positive electrode core 21 due to the expansion and contraction. Therefore, the slit burrs 20a do not press the positive electrode core 21, so that breakage of the positive electrode core 21 due to the charge and discharge may be suppressed.

Further, an exposed portion of the positive electrode core 21 where the positive electrode tab 20 of the positive electrode 11 is welded is preferably covered by an insulating tape 40. In this manner, a short-circuit due to defects of the separators 13 may be suppressed.

Next, using examples, further description will be made of the effect of the positive electrode tab 20 suppressing the breakage of the positive electrode core 21 in the cylindrical battery 10 of the present disclosure.

### <Example 1>

The positive electrode tab 20 was welded at a center of the positive electrode 11 such that the slit burrs 20a of the positive electrode tab 20 made of an H temper material do not face the positive electrode core 21 and the welding surface is on an outer side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

The cylindrical batteries of Comparative Examples 1-5 were produced following the procedures below.

### <Comparative Example 1>

The positive electrode tab 20 was welded at a center of the positive electrode 11 such that the slit burrs 20a of the positive electrode tab 20 made of an O temper material contacted the positive electrode core 21 and the welding surface was on an inner side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

### <Comparative Example 2>

The positive electrode tab 20 was welded at a center of the positive electrode 11 such that the slit burrs 20a of the positive electrode tab 20 made of an H temper material contacted the positive electrode core 21 and the welding surface was on an inner side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

### <Comparative Example 3>

The positive electrode tab 20 was welded at a center of the positive electrode 11 such that the slit burrs 20a of the positive electrode tab 20 made of an H temper material did not face the positive electrode core 21 and the welding surface was on an inner side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

### <Comparative Example 4>

The positive electrode tab 20 was welded at a center of the positive electrode 11 such that the slit burrs 20a of the positive electrode tab 20 made of an H temper material contacted the positive electrode core 21 and the welding surface was on an outer side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

### <Comparative Example 5>

The positive electrode tab 20 was welded to a winding-start portion of the positive electrode 11 such that the slit burrs 20a of the positive electrode tab 20 made of an H temper material contacted the positive electrode core 21 and the welding surface was on an inner side of winding of a wound body. The wound body was obtained by spirally winding the positive electrode 11, the negative electrode 12, and the separators 13. Thereafter, the wound body was inserted into the outer housing can 16 and an electrolyte solution was injected, and the sealing assembly 17 was crimped, so that the cylindrical battery in a size of 18650 with a capacity of 3000 mAh was produced.

### <Verification of Effect>

### <1. Bending check of positive electrode tab>

With the specifications of Example 1 and Comparative Examples 1-5, after welding the sealing assembly 17, a vibration test was conducted under the following conditions. The test sample was conducted with n = 10.
Frequency: 5 Hz
Amplitude: 2.5 cm
Time: 10 seconds
Determination of bending: The number of bending of the positive electrode tab 20 by 15 degrees or greater from the perpendicular direction was counted.

### <2. Internal Resistance Check>

The alternating-current resistance (1 kHz) of the batteries with the specifications of Example 1 and Comparative Examples 1-5 was measured with a state of charge (SOC) at 30%. The measurement was conducted with n = 10.

### <3. Check of Cut in Positive Electrode Core after Charge and Discharge Cycle>

Charge and discharge of the batteries with the specifications of Example 1 and Comparative Examples 1-5 were conducted under the following conditions. Thereafter, the outer housing can 16 of each battery was broken to take out the wound body, and further, only the positive electrode 11 was taken out from the wound body and the presence or absence of a cut in the positive electrode core 21 in the welded portion of the positive electrode tab 20 was checked. The test was conducted with n = 10.

### • Charge and discharge conditions

Charge: 3000 mA, 4.20 V, termination condition at 60 mA
Pause of charge: 10 minutes
Discharge: 15000 mA, termination condition at 2.50 V
Pause of discharge: 30 minutes
Number of cycles: 100 times

Table 1 shows the results of the effect verification of 1 to 3 above.

**[Table 1]**

| ITEM | TEMPER OF POSITIVE ELECTRODE TAB | POSITION OF POSITIVE ELECTRODE TAB | WELDING SURFACE OF POSITIVE ELECTRODE TAB | ORIENTATION OF SLIT BURR | BENDING OF POSITIVE ELECTRODE TAB AT TIME OF PRODUCTION | INTERNAL RESISTANCE | CUT IN POSITIVE ELECTRODE CORE AFTER CYCLE |
|---|---|---|---|---|---|---|---|
| EXAMPLE 1 | H MATERIAL | CENTER | OUTER SIDE OF WINDING | ORIENTATION OPPOSITE TO CORE | 0/10 | 13.7mΩ | 0/10 |
| COMPARATIVE EXAMPLE 1 | O MATERIAL | CENTER | INNER SIDE OF WINDING | ORIENTATION OF CORE | 6/10 | 13.7mS2 | 0/10 |
| COMPARATIVE EXAMPLE 2 | H MATERIAL | CENTER | INNER SIDE OF WINDING | ORIENTATION OF CORE | 0/10 | 14.2mΩ | 10/10 |
| COMPARATIVE EXAMPLE 3 | H MATERIAL | CENTER | INNER SIDE OF WINDING | ORIENTATION OPPOSITE TO CORE | 0/10 | 14.2mΩ | 10/10 |
| COMPARATIVE EXAMPLE 4 | H MATERIAL | CENTER | OUTER SIDE OF WINDING | ORIENTATION OF CORE | 0/10 | 13.9mΩ | 10/10 |
| COMPARATIVE EXAMPLE 5 | H MATERIAL | WINDING-START | INNER SIDE OF WINDING | ORIENTATION OF CORE | 0/10 | 18.6mΩ | 0/10 |

### <1. Bending of Positive Electrode Tab>

In Comparative Example 1 using the positive electrode tab 20 made of the O temper material, bending of the positive electrode tab 20 occurred in six out of ten at the time of production. In Example 1 and Comparative Examples 2-4, the positive electrode tab 20 was the H temper material, and no bending of the positive electrode tab 20 occurred.

### <2. Internal Resistance>

In Comparative Example 5 in which the welded position of the positive electrode tab 20 was the winding-start, the internal resistance was increased as compared to Example 1 and Comparative Examples 1-4.

From the above results, it is effective to adopt an H temper material for the positive electrode tab 20 and dispose the positive electrode tab 20 at the winding-start in order to suppress the bending of the positive electrode tab 20 at the time of production and to reduce the internal resistance.

### <3. Cut in Positive Electrode Core after Charge and Discharge Cycle>

In Example 1 and Comparative Examples 2-4, the positive electrode tab 20 was the H temper material and was disposed at the center of the positive electrode 11. In Comparative Examples 2 and 3 in which the welding surface of the positive electrode tab 20 was on the inner side of winding, cuts in the positive electrode core 21 were confirmed in ten out of ten after the charge and discharge cycle, irrespective of the difference of whether the orientation of the slit burrs 20a was the orientation of the positive electrode core 21 (Comparative Example 2) or opposite to the orientation of the positive electrode core 21 (Comparative Example 3). Also in Comparative Example 4 in which the welding surface of the positive electrode tab 20 was on the outer side of winding and the slit burrs 20a were oriented toward the positive electrode core 21, in ten out often, cuts occurred in the positive electrode core 21 after the charge and discharge cycle. In Example 1, no cut was confirmed in the positive electrode core 21 after the charge and discharge cycle.

From the above results, only Example 1, in which the positive electrode tab 20 is a temper H material, the positive electrode tab 20 is disposed at the center of the positive electrode 11, the welding surface is on the outer side of winding, and the slit burrs 20a are oriented opposite to the positive electrode core 21, has advantages in all of bending of the positive electrode tab 20, the internal resistance, and suppression of cuts in the positive electrode core 21 after the charge and discharge cycle.

From the above results, the use of the present invention allows to obtain the cylindrical battery capable of suppressing cuts in the positive electrode core 21 due to the charge and discharge, without losing the electrical characteristics.

Note that it goes without saying that the present invention is not limited to the aforementioned embodiment and the modification thereof, and various changes and improvements are available within the scope of the matters described in the claims of the present application.

### REFERENCE SIGNS LIST

10 Cylindrical battery, 11 Positive electrode, 12 Negative electrode, 13 Separator, 14 Electrode assembly, 16 Outer housing can, 17 Sealing assembly, 18 Insulating plate, 19 Insulating plate, 20 Positive electrode tab, 20a Slit burr, 20b Sag, 21 Positive electrode core, 22 Positive electrode mixture layer, 23 Negative electrode tab, 24 Negative electrode core, 25 Negative electrode mixture layer, 26 Terminal plate, 27 Positive electrode cap, 28 Gasket, 30 Bottomed cylinder-shaped portion, 31 Crimping portion, 32 Grooved portion, 33 Bottom, 40 Insulating tape, 50 Aluminum roll, 51 Aluminum foil, 60 Slit blade

## Claims

1. A cylindrical battery, comprising:
an electrode assembly formed by winding a positive electrode and a negative electrode, wherein
the positive electrode includes:
a positive electrode core with a positive electrode tab welded halfway in a winding direction; and
positive electrode mixture layers formed on both sides of the positive electrode core, and
the positive electrode tab
includes a slit burr formed at an end in a width direction, and
the positive electrode tab is welded such that the slit burr is positioned on a side opposite to a surface welded to the positive electrode core and on an outer side of winding, in a state of the positive electrode being wound.

2. The cylindrical battery according to claim 1, wherein
the positive electrode tab is subjected to work-hardening.

3. The cylindrical battery according to claim 1 or 2, wherein
an exposed portion of the positive electrode core where the positive electrode tab is welded is covered by an insulating tape.
